Europäisches Patentamt

European Patent Office

Office européen des brevets

(11) Veröffentlichungsnummer: **0 306 897**
**A2**

(12) **EUROPÄISCHE PATENTANMELDUNG**

(21) Anmeldenummer: 88114530.4

(22) Anmeldetag: 06.09.88

(51) Int. Cl.4: **H04M 1/23**

(30) Priorität: 09.09.87 DE 8712230 U

(43) Veröffentlichungstag der Anmeldung:
15.03.89 Patentblatt 89/11

(84) Benannte Vertragsstaaten:
**DE FR GB**

(71) Anmelder: **Siemens Aktiengesellschaft Berlin und München**
**Wittelsbacherplatz 2**
**D-8000 München 2(DE)**

(72) Erfinder: **Blöchl, Franz**
**Carl-Isert-Weg 3**
**D-4290 Bocholt(DE)**
Erfinder: **Benning, Johannes, Dipl.-Ing.**
**Geschwister-Scholl-Weg 22**
**D-4280 Borken(DE)**

(54) **Schalter für eine Fernsprechstation.**

(57) Schalter für eine Fernsprechstation, der über einen Hubbalg (2) einer Gummimatte (19) auf die Kontakte einer Leiterplatte einwirkt.

Mittels einfach gestalteter Schalter sollen zwei Schaltstellungen erreicht werden.

Dies wird dadurch erreicht, daß der Schalter als Schiebe- oder Tastschalter ausgebildet ist, der jeweils eine Ruhe- bzw. Arbeitsstellung aufweist, wobei der Schiebeschalter über eine Blattfeder (9) und der Tastschalter über eine Herzkurvensteuerung (16) die beiden Schaltstellungen erreicht.

FIG 1

## Schalter für eine Fernsprechstation

Die vorliegende Erfindung beinhaltet einen Schalter für eine Fernsprechstation, der über einen Hubbalg einer Gummimatte auf Kontakte einer Leiterplatte einwirkt.

Bei mit Tastaturen ausgerüsteten Fernsprechstationen wirken Tasten über Hubbälge von Gummimatten auf mit Kontakten versehene Schaltfolien ein. Durch diese Tasten wird somit jeweils eine kurzfristige Kontaktgabe erreicht. In manchen Anwendungsfällen hat es sich bei Fernsprechstationen als notwendig erwiesen, be stimmte Kontakte über einen längeren Zeitraum betätigt zu halten.

Aufgabe der vorliegenden Erfindung ist es daher, einen Weg aufzuzeigen, durch den zwei Schaltstellungen (Arbeits- und Ruhestellung) mittels einfach aufgebauter Schalter erreicht werden können.

Diese Aufgabe wird dadurch gelöst, daß der Schalter als Schiebe- oder Tastschalter ausgebildet ist, der jeweils zwei Schaltstellungen (Ruhe- bzw. Arbeitsstellung) aufweist, wobei der Schiebeschalter über eine Blattfeder und der Tastschalter über eine Herzkurvensteuerung die Schaltstellungen erreicht.

Sowohl mittels des Schiebe- wie auch des Tastschalters läßt sich in der Arbeitsstellung ein Schaltzustand erreichen, bei dem die Kontakte über einen gewünschten langen Zeitraum geschlossen bleiben. Die Verwendung derartiger Schalter in Verbindung mit Gummimatten hat noch den Vorteil, daß die durch statische Aufladung bedingte Durchschlagsfestigkeit erhöht wird, da in diesem Fall die Kriechstrecken wesentlich erhöht werden. Gummimatten haben außerdem den Vorteil, daß die Lebensdauer der Kontakte hinsichtlich der Anzahl der Betätigungen we sentlich höher ist als bei normalen mit herkömmlichen Kontakten bestückten Schaltern.

Dabei können sowohl der Schiebe- wie auch der Tastschalter in einem Ausschnitt der Fernsprechstation geführt und gehaltert sein.

Der Schiebeschalter kann einen in diesen Ausschnitt verschiebbar gelagerten Betätigungsknopf mit einer Verschiebefläche aufweisen, an der ein senkrecht zu ihr verlaufender Steg mit einem kugelförmigen Ende angeordnet ist, wobei der Steg auf die eine S-förmige Ausbiegung besitzende Blattfeder einwirkt. Die Kontaktfeder wird dabei zweckmäßig in ihrem der S-förmigen Ausbiegung abgewandten Endbereich schwenkbar gelagert. Der Schiebeschalter selbst kann so gestaltet werden, daß er als Umschalter (Betätigen von zwei Hubbälgen der Gummimatte) oder auch als Folgeumschalter wirkt.

Die Erfindung soll im folgenden anhand mehrerer Ausführungsbeispiele erläutert werden.

Es zeigt

FIG 1 einen Schiebeschalter in unbetätigter Stellung,

FIG 2 den Schiebeschalter nach FIG 1 in betätigter Stellung,

FIG 3 einen Tastschalter in unbetätigter Stellung,

FIG 4 diesen Tastschalter in einer um 90° gedrehten Lage,

FIG 5 den Tastschalter nach FIG 3 in betätigter Stellung.

Bei den in den Ausführungsbeispielen gezeigten Schaltern soll ein sogenannter Gummikontakt, wie er heutzutage in Tastaturen von Fernsprechstationen üblicherweise verwendet wird, auch mittels eines entsprechend gestalteten Schiebeschalters bzw. eines in Ein- und Ausschaltstellung verharrenden Tastschalters betätigbar sein.

Die in Tastaturen von Fernsprechgeräten verwendeten Gummimatten weisen üblicherweise Hubbälge auf, die mittels eines in ihnen angeordneten Kontaktteils auf auf einer Leiterplatte vorgesehene Kontakte einwirken. Bei Loslassen der Taste federt der Hubbalg aufgrund seiner domartigen Gestaltung zurück. Diese Art der Betätigung von Kontakten mittels Gummimatten machen sich die in dieser Neuerung vorgestellten Schalter zunutze.

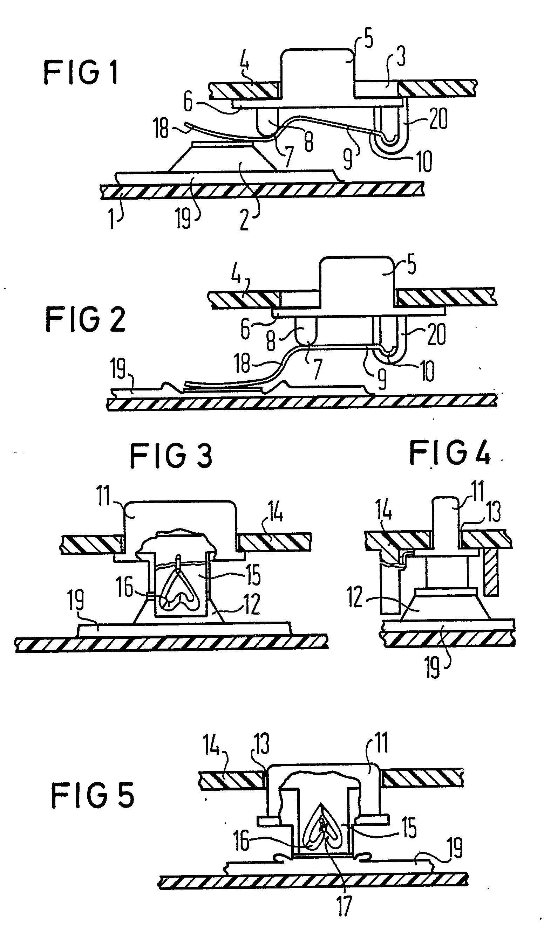

Bei der in FIG 1 und 2 dargestellten Ausführungsform ist mit 1 die Leiterplatte und mit 2 der den Kontakt auf der Leiterplatte betätigende Hubbalg einer Gummimatte 19 bezeichnet. In einem Ausschnitt 3 des Gehäuses 4 ist ein als Schiebeschalter dienender Betätigungsknopf 5 so gelagert, daß er in zwei Schaltstellungen verschiebbar ist. Der Betätigungsknopf weist an seiner als Führung dienenden Verschiebefläche 6 einen ein kugelförmiges Ende 7 aufweisenden Steg 8 auf. Dieser Steg 8 wirkt auf eine Blattfeder 9 ein, deren eines freies Ende 10 in einer Aufnahme 20 verschwenkbar gehaltert ist. Das andere Ende dieser Blattfeder 9 ist so gebogen, daß sich im unbetätigten Zustand des Schiebeschalters der Steg 8 zu Beginn einer S-förmigen Ausbiegung 18 befindet. Durch Verschieben des Betätigungsknopfes 5 gleitet der mit ihm verbundene Steg 8 über die S-förmige Ausbiegung 18 der Blattfeder 9 und drückt den Hubbalg 2 der Gummimatte 19 nieder, wodurch der gewünschte Kontakt auf der Leiterplatte betätigt wird.

Die zweite Ausführungsform gibt einen Tastschalter wieder, der in zwei Schaltstellungen betätigbar ist.

In der in den FIG 3 und 4 gezeigten Ruhestellung ist eine Taste 11 über dem Hubbalg 12 der Gummimatte 19 angeordnet. Die in einem Ausschnitt 13 eines Gehäuses 14 geführte und gehalterte Taste 11 weist eine Führung 15 mit einer Herzkurvensteuerung 16 auf, d. h. beim Niederdrücken der Taste (FIG 5) wird der Kon takt mittels des Hubbalges geschlossen und die Taste 11 verbleibt im eingeschalteten Zustand. Durch erneuten Druck auf die Taste 11 gleitet ein in die Herzkurve eingreifender Stift 17 wieder in die Ausgangslage zurück, und gibt die durch den Hubbalg geschlossenen Kontakte wieder frei.

**Ansprüche**

1. Schalter für eine Fernsprechstation, der über einen Hubbalg (2) einer Gummimatte (19) auf Kontakte einer Leiterplatte (1) einwirkt, **dadurch gekennzeichnet,** daß der Schalter als Schiebe- oder Tastschalter ausgebildet ist, der jeweils zwei Schaltstellungen (Ruhe- bzw. Arbeitsstellung) aufweist, wobei der Schiebeschalter über eine Blattfeder (9) und der Tastschalter über eine Herzkurvensteuerung (16) die Schaltstellungen erreicht.

2. Schalter nach Anspruch 1, **dadurch gekennzeichnet,** daß der Schiebeschalter einen in einem Ausschnitt (3) der Fernsprechstation verschiebbaren Betätigungsknopf (5) mit einer Verschiebefläche (6) besitzt, an der ein ein senkrecht zu ihr verlaufender Steg (8) mit einem kugelförmigen Ende (7) angeordnet ist, wobei der Steg (8) auf die eine S-förmige Ausbiegung (18) besitzende Blattfeder (9) einwirkt.

3. Schalter nach Anspruch 2, **dadurch gekennzeichnet,** daß die Blattfeder (9) in ihrem der S-förmigen Ausbiegung (18) gegenüberliegenden Endbereich (10) schwenkbar gelagert ist.

FIG 1

FIG 2

FIG 3

FIG 4

FIG 5